# FASCICULE DE BREVET EUROPEEN

(11) **EP 3 502 578 B1**
(45) Date de publication et mention de la délivrance du brevet: **27.03.2024**
(21) Numéro de dépôt: 18212920.5
(22) Date de dépôt: 17.12.2018
(51) Int. Cl.: F24F 8/10, F24F 11/56, F24F 11/65, F24F 11/52, F24F 110/00

(54) **SYSTÈME DE PURIFICATION D'AIR DOMESTIQUE**
SYSTEM ZUR REINIGUNG DER LUFT IN WOHNRÄUMEN
DOMESTIC SYSTEM FOR PURIFYING AIR

(30) Priorité: 21.12.2017 FR 1762691
(43) Date de publication de la demande: 26.06.2019
(73) Titulaire: SEB S.A., 69130 Ecully (FR)
(72) Inventeur: GANEM, Mathias, 69001 LYON (FR); GAUTHIER, Sébastian, 69007 LYON (FR)
(74) Mandataire: SEB Développement

(56) Documents cités:
- EP-A1- 2 905 584
- DE-A1-102015 111 034
- GB-A- 2 224 863
- JP-B2- 3 080 179
- JP-U- H 053 835
- US-A1- 2013 174 646

## Description

La présente invention concerne de manière générale un système de purificateur d'air destiné à être utilisé dans une maison ou un logement d'un utilisateur, pour assainir, filtrer ou purifier l'air du logement.

Le document EP2905584B1 divulgue un appareil de purification d'air domestique, mais le système décrit ne permet pas d'informer l'utilisateur sur la qualité de l'air dans l'ensemble du logement, et l'utilisateur doit déplacer l'appareil dans chacune des pièces pour les traiter une à une. Il en résulte une perte de temps et des efforts inutiles, si une pièce présente toutefois une qualité d'air acceptable car elle sera tout de même traitée.

Un but de la présente invention est de répondre aux inconvénients du document de l'art antérieur mentionné ci-dessus et en particulier, tout d'abord, de proposer un système de purificateur d'air qui évite des efforts et opérations inutiles à l'utilisateur pour traiter toutes les pièces de son logement.

Pour cela un premier aspect de l'invention concerne un système de purification d'air selon la revendication 1.

Le capteur d'air est un capteur de pollution de l'air pour mesurer la qualité de l'air.

Le système selon la mise en oeuvre ci-dessus comprend un capteur d'air nomade qui peut être accouplé ou désaccouplé du purificateur d'air. En d'autres termes, le capteur d'air nomade peut être désaccouplé pour être déplacé et détaché du purificateur, et il pourra encore fonctionner de manière autonome, pour mesurer la qualité de l'air (niveau de particules telles que des particules fines, présence de composés chimiques, tels que des composés organiques volatiles, ou des composés biologiques...), et pour communiquer avec l'interface homme - machine pour que cette dernière affiche les résultats de mesure.

L'invention propose avantageusement de prévoir que le capteur d'air nomade puisse envoyer des données de mesure à l'interface homme machine pour que ces mesures soient affichées. Ainsi l'utilisateur est informé du niveau de qualité de l'air.

De plus, si le capteur d'air nomade désaccouplé est dans un espace où ne se trouve pas le purificateur d'air, alors ce dernier fonctionne selon le mode de fonctionnement désaccouplé, sans prendre en compte les mesures du capteur d'air nomade, car elles ne sont pas relatives à l'espace où se trouve le purificateur d'air.

De plus, si le capteur d'air nomade peut être accouplé au purificateur d'air pour lui transmettre les mesures afin de permettre le fonctionnement en boucle fermée et désaccouplé du purificateur d'air pour permettre le fonctionnement désaccouplé, on peut prévoir d'attacher le capteur d'air nomade au purificateur d'air ou de l'en détacher indépendamment du statut accouplé ou désaccouplé. En particulier, lorsque le capteur d'air nomade est en statut désaccouplé dans le lieu distant (une autre pièce du logement), il est évidemment détaché du purificateur d'air, mais en statut accouplé, le capteur d'air nomade peut être attaché ou détaché du purificateur d'air. Enfin, lorsque le capteur d'air nomade est attaché au purificateur d'air, on peut toutefois le désaccoupler pour couper la transmission des mesures et pour forcer un fonctionnement en mode de fonctionnement désaccouplé.

En résumé, l'utilisateur peut faire fonctionner le purificateur d'air en mode de fonctionnement désaccouplé pour améliorer la qualité de l'air d'une première pièce de son logement, et en même temps, il peut simplement déposer le capteur d'air nomade (détaché et désaccouplé) dans une deuxième pièce de son logement pour y faire des mesures de la qualité de l'air dans cette deuxième pièce, qui seront affichées par l'interface homme -machine. La mesure est réalisée en parallèle, et sans déplacer tout le système et en particulier le purificateur d'air, qui est typiquement un objet d'un poids et d'un encombrement qui rendent sa manipulation plus difficile que celle du simple capteur d'air nomade.

En particulier, selon la mise en oeuvre ci-dessus relative au système, le capteur d'air nomade peut être mis dans un état accouplé après une action d'accouplement, ou être mis dans un état désaccouplé, après une action de désaccouplement. Le mode de fonctionnement accouplé dure aussi longtemps que le capteur d'air nomade est dans l'état accouplé, et le mode de fonctionnement désaccouplé dure aussi longtemps que le capteur d'air nomade est dans l'état désaccouplé.

L'interface homme - machine peut comprendre des boutons de commande, un écran d'affichage, ou encore un écran tactile.

Avantageusement, le mode de fonctionnement désaccouplé est un mode de fonctionnement en boucle ouverte ne prenant en compte aucun retour de mesure de capteur d'air. Selon cette mise en oeuvre, le purificateur d'air fonctionne de la manière la plus simple possible, c'est-à-dire de manière continue, sans prendre en compte de retour d'informations extérieures.

Avantageusement, le système de purification d'air comprend au moins un autre capteur d'air, et le mode de fonctionnement désaccouplé comprend :
- un mode de fonctionnement en boucle fermée prenant en compte un retour de mesures dudit au moins un autre capteur d'air, ou
- un mode de fonctionnement en boucle ouverte ne prenant en compte aucun retour de mesure de capteur d'air. Selon cette mise en oeuvre, le système comprend plusieurs capteurs d'air, dont un qui est le capteur d'air nomade pouvant être déplacé dans une autre pièce. L'autre capteur d'air peut alors rester dans le même lieu que le purificateur d'air et lui envoyer des résultats de mesure.

Avantageusement, ledit un autre capteur est intégré dans le purificateur d'air. En particulier, l'autre capteur d'air peut être installé à demeure sur le purificateur d'air. On peut prévoir pour cet autre capteur d'air des fonctions minimalistes (l'autre capteur d'air ne mesure qu'une partie des paramètres que peut mesurer le capteur d'air nomade), pour pouvoir envoyer au purificateur d'air les mesures les plus importantes (par exemple seulement une présence globale de particules fines, et une seule espèce chimique) et garantir un fonctionnement avec une prestation basique. Le capteur d'air nomade, opérant des mesures plus complètes pourra, lorsqu'il est accouplé, fournir toutes les autres mesures pour assurer un fonctionnement optimal.

Alternativement, l'autre capteur d'air est un capteur externe au purificateur, tel qu'un capteur d'une unité de climatisation distincte, et qui peut envoyer par transmission filaire ou non des données au purificateur d'air.

Alternativement, l'autre capteur d'air est un capteur portable, amovible, destiné à fonctionner avec un appareil électronique portable. De tels capteurs basiques peuvent fournir au purificateur d'air des mesures pour un fonctionnement en boucle fermée, alors que le capteur d'air nomade est placé à distance du purificateur pour effectuer des mesures autonomes, de son côté.

Avantageusement, dans le mode de fonctionnement accouplé, l'unité de commande prend en compte :
- uniquement les mesures du capteur d'air nomade, ou
- des mesures du capteur d'air nomade et des mesures dudit un autre capteur d'air. Selon la deuxième option de cette mise en oeuvre, l'unité de commande peut recevoir des mesures des deux capteurs d'air, et on peut prévoir de faire une priorisation de la prise en compte (on priorise les mesures du capteur le plus précis par exemple), ou une pondération (telle qu'une moyenne), ou une prise en compte complémentaire (le capteur d'air nomade ne mesure que les particules fines par exemple, et l'autre capteur d'air ne mesure que certaines espèces chimiques).

Avantageusement, dans le mode de fonctionnement accouplé du purificateur, l'unité de commande prend en compte la pire des mesures entre les mesures renvoyées par le capteur d'air nomade et par ledit autre capteur d'air.

Avantageusement, le module nomade comprend une unité de calcul numérique. Autrement dit, le module d'air nomade est équipé pour traiter lui-même les mesures du capteur, pour envoyer des données adéquates soit à l'interface homme machine, ou à l'unité de commande.

Avantageusement, le module nomade comprend une unité de ventilation autonome, agencée pour créer un flux d'air vers une portion de mesure du capteur d'air nomade. Le capteur peut alors effectuer des mesures fiables et représentatives du milieu dans lequel il se trouve.

Avantageusement, le module nomade comprend des moyens de stockage d'énergie électrique. Le module nomade est typiquement un module sans fil, autonome.

Avantageusement, l'appareil électronique portable multimédia, peut être une tablette tactile ou un téléphone intelligent,. On peut prévoir que le module nomade et/ou capteur d'air nomade est dépourvu d'écran d'affichage, mais il peut envoyer des données de mesure à l'appareil électronique portable qui est pourvu d'un écran d'affichage. On peut envisager une liaison par ondes radio, ou même par internet ou par le réseau téléphonique pour envoyer les données de mesure depuis le capteur d'air nomade vers l'appareil électronique portable et/ou l'interface homme machine.

Avantageusement, le purificateur d'air comprend une interface homme - machine agencée pour établir une connexion de données avec l'unité de commande, et pour recevoir une commande d'un utilisateur et envoyer la commande à l'unité de commande et/ou à l'unité de filtration. L'utilisateur peut commander le purificateur d'air directement depuis ce dernier.

Avantageusement, ladite interface homme - machine est une première interface homme-machine agencée pour afficher les mesures du capteur d'air nomade désaccouplé au cours du mode de fonctionnement désaccouplé et le système de purification d'air comprend une deuxième interface homme - machine agencée pour commander le purificateur d'air au cours du mode de fonctionnement désaccouplé.

Le système comprend deux interfaces homme-machine, chacune dédiée à une fonction particulière, au cours du mode de fonctionnement désaccouplé : cela permet d'aider l'utilisateur pour commander le système.

Avantageusement, la première interface homme - machine est solidaire du capteur d'air nomade. En d'autres termes, le capteur d'air nomade est intégré à la première interface homme machine qui forment ensemble une unité électronique autonome et portable

Avantageusement, la deuxième interface homme - machine est solidaire du purificateur d'air. En d'autres termes, la deuxième interface homme machine est installée ou intégrée sur ou dans le purificateur d'air, ce qui permet à l'utilisateur de le commander directement en étant à côté (à proximité immédiate), même si le capteur d'air nomade est à distance (dans une autre pièce).

On peut prévoir de commander le purificateur depuis la première interface homme machine, ou depuis la deuxième interface homme machine, ce qui laisse toute liberté à l'utilisateur.

On peut prévoir aussi d'afficher les mesures du capteur d'air nomade sur la première interface homme machine, mais aussi sur la deuxième interface homme machine.

Avantageusement, le système de purification d'air comprend des bornes de contact complémentaires, agencées pour établir un contact électrique entre le purificateur d'air et le capteur d'air nomade lorsque ce dernier est accouplé (ou attaché) avec le purificateur d'air. On peut prévoir de recharger une batterie du capteur d'air nomade, et/ou envoyer des données de mesures directement par le circuit filaire.

Avantageusement, le système de purification d'air comprend une interface de connexion sans contact, agencée pour établir une connexion sans contact entre le purificateur d'air et le capteur d'air nomade.

Un second aspect de l'invention est un procédé d'utilisation d'un système de purification d'air selon le premier aspect, comprenant les étapes consistant à :
- commander le purificateur d'air à partir de l'au moins une interface homme-machine pour faire fonctionner l'unité de filtration dans une pièce d'un logement,
- positionner le capteur d'air nomade désaccouplé dans un lieu situé à distance du purificateur d'air, par exemple dans une autre pièce du logement, et commander alors l'unité de filtration selon le mode de fonctionnement désaccouplé,
- afficher sur ladite interface homme - machine des mesures du capteur d'air nomade.

Ce procédé d'utilisation permet de mesurer une qualité d'air à un lieu distant du purificateur, qui fonctionne alors en mode de fonctionnement désaccouplé. Il est à noter que le fonctionnement initial du purificateur peut aussi bien être en mode de fonctionnement accouplé ou désaccouplé. Cependant, dès que le capteur d'air nomade est dans une autre pièce (et dans un état désaccouplé), alors le purificateur fonctionne en mode de fonctionnement désaccouplé. L'utilisateur peut alors vérifier la qualité de l'air dans une ou plusieurs pièces sans pour autant arrêter ou déplacer le purificateur d'air.

Avantageusement, le procédé d'utilisation comprend les étapes consistant à :
- déplacer le purificateur d'air dans le lieu préalablement situé à distance,
- commander le purificateur d'air à partir de l'au moins une interface homme-machine,
- accoupler le capteur d'air nomade avec le purificateur d'air,
- faire fonctionner l'unité de filtration selon le mode de fonctionnement accouplé dans ledit lieu.

Avantageusement, si le capteur d'air nomade est accouplé et attaché au purificateur d'air et si l'unité de purification fonctionne en mode de fonctionnement accouplé, alors le procédé comprend une étape consistant à faire fonctionner automatiquement l'unité de purification en mode de fonctionnement désaccouplé lors d'un détachement du capteur d'air nomade du purificateur d'air.

Avantageusement, l'unité de purification est automatiquement commandée selon le mode de fonctionnement accouplé lorsque le capteur d'air nomade est attaché à nouveau avec le purificateur d'air.

D'autres caractéristiques et avantages de la présente invention apparaîtront plus clairement à la lecture de la description détaillée qui suit d'un mode de réalisation de l'invention donné à titre d'exemple nullement limitatif et illustré par les dessins annexés, dans lesquels :

la figure 1 représente une vue générale d'un système de purification d'air avec un module nomade accouplé à un purificateur d'air ;

la figure 2 représente le système de la figure 1, avec le module nomade désaccouplé du purificateur d'air ;

la figure 3 représente un premier mode d'utilisation du système de purification d'air des figures 1 et 2 ;

la figure 4 représente un deuxième mode d'utilisation du système de purification d'air des figures 1 et 2.

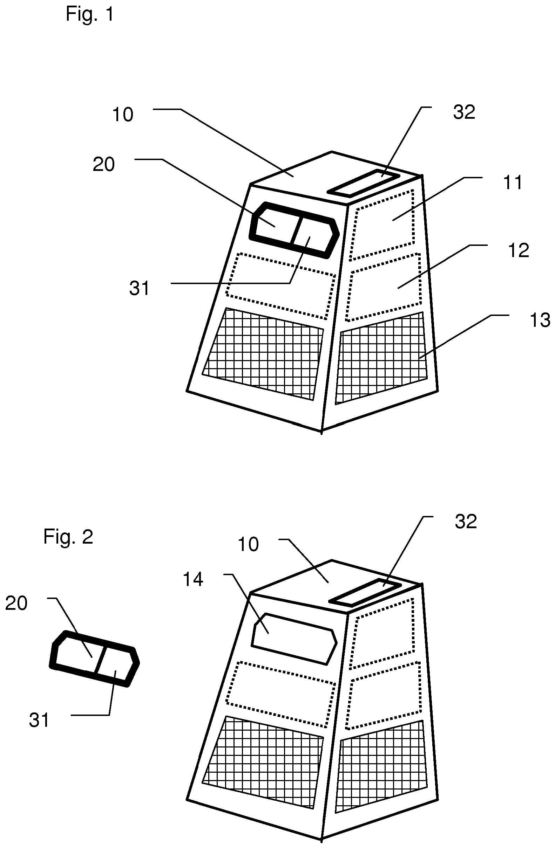

La figure 1 représente un système de purification d'air qui comprend un purificateur d'air 10 qui supporte un module nomade 20 accouplé et attaché au purificateur d'air 10.

Le purificateur d'air 10 comprend typiquement une unité de commande 11 et une unité de filtration 12 logées dans un boîtier, de sorte à pouvoir filtrer et purifier de l'air d'une pièce d'un logement d'un utilisateur. On peut prévoir que l'unité de filtration 12 comprend un moto-ventilateur et des filtres pour retirer des particules et/ou des composés chimiques de l'air.

A cet effet, on peut prévoir une première unité de filtres pour retirer les particules, tels qu'au moins un filtre HEPA, et une deuxième unité de filtres contenant un principe actif, tel que du charbon actif, pour réagir avec des composés chimiques ou des organismes vivants.

En particulier, on peut prévoir de traiter
- les particules en suspension dans l'air, d'un diamètre aérodynamique (ou diamètre aéraulique) inférieur à 10 micromètres notées PM10,
- les particules plus fines dont le diamètre est inférieur à 2,5 micromètres, appelées « particules fines » ou PM2.5,
- les composés organiques volatiles (formaldéhyde, benzène, etc.),
- le monoxyde de carbone. A cet effet, on peut prévoir une structure de filtration comme celle décrite dans le document FR3026020A1.

Le purificateur d'air comprend également des grilles 13 pour permettre à l'unité de filtration 12 d'établir un flux d'air avec l'espace dans lequel il se trouve.

Le module nomade 20 comprend avant tout au moins un capteur d'air nomade non représenté, et qui est agencé pour mesurer, de manière non limitative, au moins un ou plusieurs des paramètres suivants :
- une teneur des composés organiques volatiles (formaldéhyde, benzène, etc.)
- une teneur de monoxyde de carbone
- une teneur en particules (PM2.5, PM10)
- une température
- une humidité relative
- une pression atmosphérique
- une teneur en dioxyde de carbone

Le module nomade 20 peut également selon un mode de réalisation préféré comprendre une interface homme machine 31, ici sous forme d'écran d'affichage tactile, pour commander l'unité de commande 11, et aussi pour afficher des mesures (ou des résultats de mesure) effectuées par le capteur d'air nomade.

Le module nomade 20 est prévu pour fonctionner en coopération avec le purificateur d'air 10 (en statut accouplé), ou en autonomie (en statut désaccouplé). Sur la figure 1, le module d'air nomade est attaché et accouplé au purificateur d'air 10, alors que sur la figure 2, il est désaccouplé et détaché du purificateur d'air 10, et on voit sur cette dernière figure 2 une empreinte 14 formée dans le purificateur d'air 10 pour accueillir de manière stable le module nomade 20.

En conséquence, un premier mode de fonctionnement accouplé peut être prévu, dans lequel, comme sur la figure 1 par exemple, le purificateur d'air 10 prend en compte les mesures du capteur d'air nomade 20 accouplé et logé dans le module nomade pour piloter l'unité de filtration 12. En particulier, si le capteur d'air nomade détecte une teneur en particules ou en composés chimiques ou biologiques supérieure à un seuil, alors l'unité de commande 11 pilote l'unité de filtration 12 pour filtrer et purifier l'air environnant. Une fois la qualité d'air jugée satisfaisante par l'unité de commande 11 qui reçoit les mesures du capteur d'air nomade, alors l'unité de commande 11 peut commander l'arrêt de l'unité de filtration 12.

Un deuxième mode de fonctionnement désaccouplé peut être prévu. Dans ce cas, l'unité de commande 11 reçoit un ordre de mise en marche selon le mode de fonctionnement désaccouplé depuis une interface homme machine, et pilote alors l'unité de filtration sans prendre en compte les mesures du capteur d'air nomade logé dans le module nomade 20 qui est désaccouplé. Selon le mode de fonctionnement désaccouplé, il n'y a pas d'interaction entre le purificateur d'air 10 et le module nomade 20, que ce dernier soit attaché ou détaché.

En conséquence, le module nomade 20 peut être éteint ou plus avantageusement placé dans un endroit distant du purificateur d'air 10, et fonctionner de manière autonome, sans communiquer avec le purificateur d'air 10. En particulier, l'utilisateur peut alors placer le module nomade 20 dans une autre pièce de son logement, et faire afficher sur l'interface homme machine 31 du module nomade 20 des mesures ou résultats de mesure du capteur d'air nomade pour savoir si la pièce en question présente une qualité d'air satisfaisante ou non. Cela ne nécessite pas le déplacement du purificateur d'air 10 dans cette pièce du logement, ce qui améliore notablement l'ergonomie du système. De plus, le mode de fonctionnement désaccouplé permet de faire fonctionner le purificateur d'air 10 sans tenir compte des mesures effectuées dans une autre pièce.

On peut toutefois très bien prévoir d'utiliser un autre capteur d'air pour fournir un retour de mesure à l'unité de commande 11, lorsque le module nomade 20 est désaccouplé. Dans ce cas, le purificateur d'air fonctionne en boucle fermée (la ventilation est pilotée selon un retour de mesure de la qualité d'air). On peut aussi prévoir de faire fonctionner le purificateur d'air en boucle ouverte (sans aucun retour de mesure de qualité d'air), si aucun autre capteur d'air que la capteur d'air nomade n'est prévu. Dans ce dernier cas, le purificateur d'air peut seulement selon deux états : allumé ou éteint directement par l'utilisateur.

On peut prévoir également une autre interface homme machine 33 formée par un appareil électronique portable (une tablette tactile ou un téléphone portable intelligent) pour afficher les mesures du capteur d'air nomade, ou pour piloter l'unité de commande. Dans ce cas, l'interface homme machine 31 du module d'air nomade 20 est optionnelle.

On peut aussi envisager une autre interface homme machine 32 visible figures 1 et 2, et installée à demeure sur le purificateur d'air 10, pour piloter ce dernier directement.

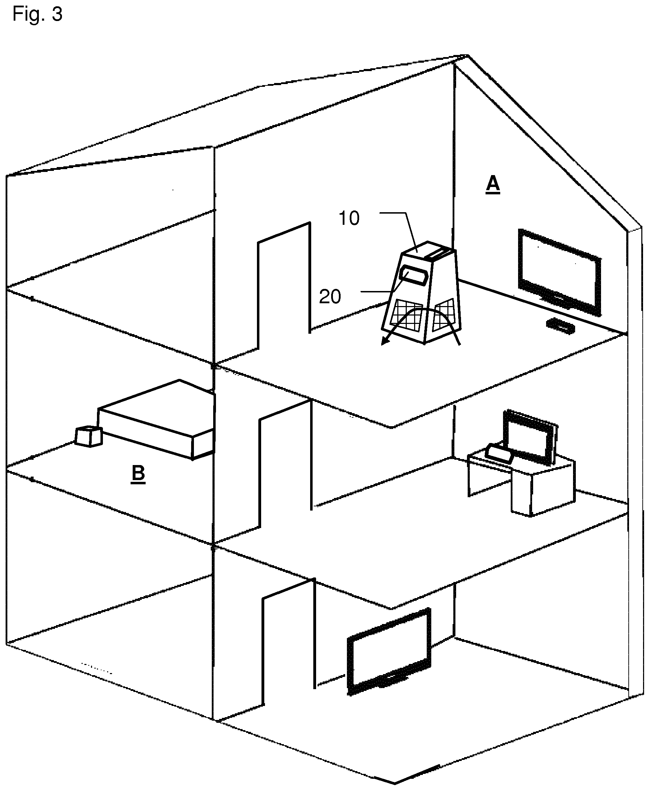

La figure 3 représente l'utilisation selon le mode de fonctionnement accouplé. Le purificateur d'air 10 est situé dans une pièce A du logement d'un utilisateur, ainsi que le module nomade 20 qui est ici en position attachée et en statut accouplé. On peut très bien prévoir aussi d'utiliser le module nomade 20 en position détachée, mais alors il faut qu'il soit dans la pièce A. En effet, selon le mode de fonctionnement accouplé, le purificateur d'air 10 est piloté en fonction des mesures du capteur d'air nomade intégré dans le module nomade 20. On peut prévoir de forcer le fonctionnement en mode de fonctionnement accouplé dès que le module nomade 20 est attaché au purificateur d'air 10, pour le faire passer en statut accouplé.

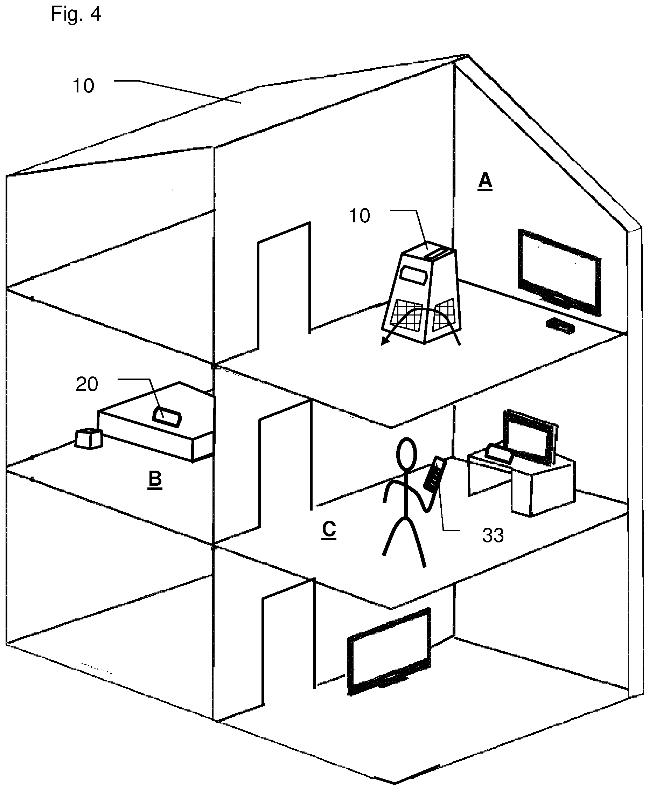

La figure 4 représente l'utilisation selon le mode de fonctionnement désaccouplé. Le purificateur d'air 10 est situé dans une pièce A du logement d'un utilisateur et fonctionne de manière continue, quelles que soient les mesures effectuées par le capteur d'air nomade qui est désaccouplé. En effet, le module nomade 20 qui est ici en position détachée, est placé dans une pièce B à l'étage inférieur du logement. Dans ce cas, l'interface homme machine 31 du module nomade 20 affiche les mesures effectuées par le capteur d'air nomade.

Le passage en mode de fonctionnement désaccouplé peut être commandé par l'utilisateur lui-même via l'une des interfaces homme machine, ou dès que le module nomade est détaché physiquement du purificateur d'air 10. On peut aussi envisager de passer automatiquement en mode de fonctionnement désaccouplé et désaccoupler le module nomade 20 dès qu'un signal sans fil envoyé au purificateur d'air 10 par le module nomade 20 présente un niveau inférieur à un seuil prédéterminé, indiquant que le module nomade 20 est situé au-delà d'une distance prédéterminée (en somme, dès que le signal est "perdu").

On peut prévoir comme vu ci-dessus une autre interface homme machine 33 formée par un téléphone portable tenu par l'utilisateur se tenant dans une troisième pièce C du logement, et affichant aussi les mesures du capteur d'air nomade. La flexibilité du système est améliorée. Ainsi, l'utilisateur, seulement s'il voit que la qualité d'air dans la pièce B n'est pas satisfaisante, pourra déplacer le purificateur d'air 10 dans cette pièce B ultérieurement.

Pour permettre cette utilisation, on peut prévoir d'équiper le purificateur d'air 10 et le module nomade 20 avec des unités de communication sans fil (du type par ondes radio, WIFI ou Bluetooth ou autre) pour transmettre des données directement entre les appareils décrits, ou via un réseau internet par exemple.

Enfin, le module d'air nomade 20 est équipé de moyens de stockage d'électricité, et aussi d'un ventilateur, pour pouvoir fonctionner de manière autonome, en particulier lors du mode de fonctionnement désaccouplé.

On comprendra que diverses modifications et/ou améliorations évidentes pour l'homme du métier peuvent être apportées aux différents modes de réalisation de l'invention décrits dans la présente description sans sortir du cadre de l'invention défini par les revendications annexées. que le module nomade 20 est situé au-delà d'une distance prédéterminée (en somme, dès que le signal est "perdu").

On peut prévoir comme vu ci-dessus une autre interface homme machine 33 formée par un téléphone portable tenu par l'utilisateur se tenant dans une troisième pièce C du logement, et affichant aussi les mesures du capteur d'air nomade. La flexibilité du système est améliorée. Ainsi, l'utilisateur, seulement s'il voit que la qualité d'air dans la pièce B n'est pas satisfaisante, pourra déplacer le purificateur d'air 10 dans cette pièce B ultérieurement.

Pour permettre cette utilisation, on peut prévoir d'équiper le purificateur d'air 10 et le module nomade 20 avec des unités de communication sans fil (du type par ondes radio, WIFI ou Bluetooth ou autre) pour transmettre des données directement entre les appareils décrits, ou via un réseau internet par exemple.

Enfin, le module d'air nomade 20 est équipé de moyens de stockage d'électricité, et aussi d'un ventilateur, pour pouvoir fonctionner de manière autonome, en particulier lors du mode de fonctionnement désaccouplé.

On comprendra que diverses modifications et/ou améliorations évidentes pour l'homme du métier peuvent être apportées aux différents modes de réalisation de l'invention décrits dans la présente description sans sortir du cadre de l'invention défini par les revendications annexées.

## Revendications

1. Système de purification d'air comprenant :
- un purificateur d'air (10) avec une unité de commande (11) et une unité de filtration (12) commandée par l'unité de commande (11),
- un module nomade (20) du type module autonome sans fil, comprenant des moyens de stockage d'énergie électrique et intégrant au moins un capteur d'air nomade agencé pour pouvoir être :
• accouplé au purificateur d'air (10), ou
• désaccouplé du purificateur d'air (10),
le module nomade (20) comportant une interface homme-machine (31, 32, 33)
et/ou
le système de purification d'air comporte en outre un appareil électronique portable multimédia, agencé pour former une interface homme - machine portable (31, 32, 33) et agencée pour afficher des mesures du capteur d'air nomade,
l'unité de commande (11) étant agencée pour recevoir de la part de ladite au moins une interface homme - machine (31, 32, 33) une instruction pour commander l'unité de filtration (12) selon au moins :
• un mode de fonctionnement accouplé prenant en compte un retour de mesures du capteur d'air nomade accouplé, et
• un mode de fonctionnement désaccouplé ne prenant pas en compte un retour de mesures du capteur d'air nomade désaccouplé,
où dans le mode de fonctionnement désaccouplé du purificateur d'air (10), l'interface homme - machine (31, 32, 33) du module nomade et/ou de l'appareil électronique portable multimédia est agencée pour afficher des mesures du capteur d'air nomade désaccouplé.

2. Système de purification d'air selon la revendication précédente, comprenant au moins un autre capteur d'air, et dans lequel le mode de fonctionnement désaccouplé comprend :
- un mode de fonctionnement en boucle fermée prenant en compte un retour de mesures dudit au moins un autre capteur d'air, ou
- un mode de fonctionnement en boucle ouverte ne prenant en compte aucun retour de mesure de capteur d'air.

3. Système de purification d'air selon la revendication précédente, dans lequel, dans le mode de fonctionnement accouplé, l'unité de commande prend en compte :
- uniquement les mesures du capteur d'air nomade, ou
- des mesures du capteur d'air nomade et des mesures dudit un autre capteur d'air.

4. Système de purification d'air selon l'une des revendications 2 ou 3, dans lequel dans le mode de fonctionnement accouplé du purificateur, l'unité de commande prend en compte la pire des mesures entre les mesures renvoyées par le capteur d'air nomade et par ledit autre capteur d'air

5. Système de purification d'air selon l'une des revendications précédentes, dans lequel le module nomade (20) comprend une unité de ventilation autonome, agencée pour créer un flux d'air vers une portion de mesure du capteur d'air nomade.

6. Système de purification d'air selon l'une des revendications précédentes, dans lequel ladite interface homme - machine est une première interface homme-machine agencée pour afficher les mesures du capteur d'air nomade désaccouplé au cours du mode de fonctionnement désaccouplé et le système de purification d'air comprend une deuxième interface homme - machine agencée pour commander le purificateur d'air au cours du mode de fonctionnement désaccouplé.

7. Système de purification d'air selon la revendication précédente, dans lequel la première interface homme - machine (31) est solidaire du capteur d'air nomade.

8. Système de purification d'air selon la revendication 6 ou 7, dans lequel la deuxième interface homme - machine (32) est solidaire du purificateur d'air (10).

9. Système de purification d'air selon l'une des revendications précédentes, comprenant des bornes de contact complémentaires, agencées pour établir un contact électrique entre le purificateur d'air (10) et le capteur d'air nomade lorsque ce dernier est accouplé avec le purificateur d'air (10).

10. Système de purification d'air selon l'une des revendications précédentes, comprenant une interface de connexion sans contact, agencée pour établir une connexion sans contact entre le purificateur d'air (10) et le capteur d'air nomade.

11. Procédé d'utilisation d'un système de purification d'air selon l'une des revendications précédentes, comprenant les étapes consistant à :
- commander le purificateur d'air (10) à partir de l'au moins une interface homme-machine pour faire fonctionner l'unité de filtration (12) dans une pièce d'un logement,
- positionner le capteur d'air nomade désaccouplé dans un lieu situé à distance du purificateur d'air (10), par exemple dans une autre pièce du logement, et commander alors l'unité de filtration (12) selon le mode de fonctionnement désaccouplé,
- afficher sur ladite interface homme - machine des mesures du capteur d'air nomade.

12. Procédé d'utilisation selon la revendication précédente, comprenant les étapes consistant à :
- déplacer le purificateur d'air (10) dans le lieu préalablement situé à distance,
- commander le purificateur d'air (10) à partir de l'au moins une interface homme-machine,
- accoupler le capteur d'air nomade avec le purificateur d'air (10),
- faire fonctionner l'unité de filtration (12) selon le mode de fonctionnement accouplé dans ledit lieu.

13. Procédé d'utilisation selon l'une des revendications 11 ou 12, dans lequel, si le capteur d'air nomade est accouplé et attaché au purificateur d'air (10) et si l'unité de purification fonctionne en mode de fonctionnement accouplé, alors le procédé comprend une étape consistant à faire fonctionner automatiquement l'unité de purification en mode de fonctionnement désaccouplé lors d'un détachement du capteur d'air nomade du purificateur d'air (10).

14. Procédé d'utilisation selon l'une des revendications 12 ou 13, dans lequel l'unité de purification est automatiquement commandée selon le mode de fonctionnement accouplé lorsque le capteur d'air nomade est attaché à nouveau avec le purificateur d'air (10).

## Patentansprüche

1. Luftreinigungssystem, umfassend:
- einen Luftreiniger (10) mit einer Steuereinheit (11) und einer von der Steuereinheit (11) gesteuerten Filtereinheit (12),
- ein mobiles Modul (20) vom drahtlosen autonomen Typ, das Stromspeichermittel umfasst und mindestens einen mobilen Luftsensor aufnimmt, der eingerichtet ist, um imstande zu sein:
- mit dem Luftreiniger (10) gekoppelt zu werden, oder
- vom Luftreiniger (10) entkoppelt zu werden,
wobei das mobile Modul (20) eine Mensch-Maschine-Schnittstelle (31, 32, 33) umfasst
und/oder
das Luftreinigungssystem weiter eine multimediale tragbare elektronische Einrichtung umfasst, die eingerichtet ist, um eine Mensch-Maschine-Schnittstelle (31, 32, 33) zu bilden und eingerichtet ist, um Messungen des mobilen Luftsensors anzuzeigen,
wobei die Steuereinheit (11) eingerichtet ist, um seitens der mindestens einen Mensch-Maschine-Schnittstelle (31, 32, 33) eine Anweisung zum Steuern der Filtereinheit (12) gemäß mindestens dem Folgenden zu empfangen:
- einem gekoppelten Betriebsmodus, der eine Rückmeldung von Messungen des gekoppelten mobilen Luftsensors berücksichtigt, und
- einem entkoppelten Betriebsmodus, der eine Rückmeldung von Messungen des entkoppelten mobilen Luftsensors nicht berücksichtigt,
oder in einem entkoppelten Betriebsmodus des Luftreinigers (10), die Mensch-Maschine-Schnittstelle (31, 32, 33) des mobilen Moduls und/oder der multimedialen tragbaren elektronischen Einrichtung eingerichtet ist, um Messungen des entkoppelten mobilen Luftsensors anzuzeigen.

2. Luftreinigungssystem nach dem vorstehenden Anspruch, umfassend mindestens einen weiteren Luftsensor und wobei der entkoppelte Betriebsmodus Folgendes umfasst:
- einen Betriebsmodus mit geschlossener Schleife, der eine Rückmeldung von Messungen des mindestens einen weiteren Luftsensors berücksichtigt, oder
- einen Betriebsmodus mit offener Schleife, der keine Rückmeldung einer Messung eines Luftsensors berücksichtigt.

3. Luftreinigungssystem nach dem vorstehenden Anspruch, wobei die Steuereinheit im gekoppelten Betriebsmodus Folgendes berücksichtigt:
- nur die Messungen des mobilen Luftsensors, oder
- Messungen des mobilen Luftsensors und Messungen des einen weiteren Luftsensors.

4. Luftreinigungssystem nach einem der Ansprüche 2 oder 3, wobei die Steuereinheit im gekoppelten Betriebsmodus des Reinigers die schlechteste Messung unter den von dem mobilen Luftsensor und von dem einen weiteren Luftsensor zurückgesendeten Messungen berücksichtigt.

5. Luftreinigungssystem nach einem der vorstehenden Ansprüche, wobei das mobile Modul (20) eine autonome Belüftungseinheit umfasst, die eingerichtet ist, um einen Luftstrom zu einem Messabschnitt des mobilen Luftsensors zu erzeugen.

6. Luftreinigungssystem nach einem der vorstehenden Ansprüche, wobei die Mensch-Maschine-Schnittstelle eine erste Mensch-Maschine-Schnittstelle ist, die eingerichtet ist, um die Messungen des entkoppelten mobilen Luftsensors im Verlaufe des entkoppelten Betriebsmodus anzuzeigen, und das Luftreinigungssystem eine zweite Mensch-Maschine-Schnittstelle umfasst, um den Luftreiniger im Verlaufe des entkoppelten Betriebsmodus zu steuern.

7. Luftreinigungssystem nach dem vorstehenden Anspruch, wobei die erste Mensch-Maschine-Schnittstelle (31) fest mit dem mobilen Luftsensor verbunden ist.

8. Luftreinigungssystem nach Anspruch 6 oder 7, wobei die zweite Mensch-Maschine-Schnittstelle (32) fest mit dem Luftreiniger (10) verbunden ist.

9. Luftreinigungssystem nach einem der vorstehenden Ansprüche, umfassend zusätzliche Kontaktanschlüsse, die eingerichtet sind, um einen elektrischen Kontakt zwischen dem Luftreiniger (10) und dem mobilen Luftsensor herzustellen, wenn dieser Letztere mit dem Luftreiniger (10) gekoppelt ist.

10. Luftreinigungssystem nach einem der vorstehenden Ansprüche, umfassend eine kontaktlose Verbindungsschnittstelle, die eingerichtet ist, um eine kontaktlose Verbindung zwischen dem Luftreiniger (10) und dem mobilen Luftsensor herzustellen.

11. Verfahren zur Verwendung eines Luftreinigungssystems nach einem der vorstehenden Ansprüche, umfassend die Schritte, die aus Folgendem bestehen:
- Steuern des Luftreinigers (10) ausgehend von der mindestens einen Mensch-Maschine-Schnittstelle, um die Filtereinheit (12) in einem Zimmer einer Wohneinrichtung zu betreiben,
- Positionieren des entkoppelten mobilen Luftsensors an einer von dem Luftreiniger (10) entfernt gelegenen Stelle, beispielsweise in einem anderen Zimmer der Wohneinrichtung, und dann Steuern der Filtereinheit (12) gemäß dem entkoppelten Betriebsmodus,
- Anzeigen von Messungen des mobilen Luftsensors auf der Mensch-Maschine-Schnittstelle.

12. Verwendungsverfahren nach dem vorstehenden Anspruch, umfassend die Schritte, die aus Folgendem bestehen:
- Verlagern des Luftreinigers (10) in der zuvor entfernt gelegenen Stelle,
- Steuern des Luftreinigers (10) ausgehend von der mindestens einen Mensch-Maschine-Schnittstelle,
- Koppeln des mobilen Luftsensors mit dem Luftreiniger (10),
- Betreiben der Filtereinheit (12) gemäß dem gekoppelten Betriebsmodus in der Stelle.

13. Verwendungsverfahren nach einem der Ansprüche 11 oder 12, wobei, falls der mobile Luftsensor mit dem Luftreiniger (10) gekoppelt und befestigt ist und falls die Reinigungseinheit im gekoppelten Betriebsmodus betrieben wird, dann umfasst das Verfahren einen Schritt, der darin besteht, die Reinigungseinheit bei einer Lösung des mobilen Luftsensors vom Luftreiniger (10) automatisch im entkoppelten Betriebsmodus zu betreiben.

14. Verwendungsverfahren nach einem der Ansprüche 12 oder 13, wobei die Reinigungseinheit automatisch gemäß dem gekoppelten Betriebsmodus gesteuert wird, wenn der mobile Luftsensor wieder mit dem Luftreiniger (10) befestigt ist.

## Claims

1. System for purifying air, comprising:
- an air purifier (10) with a control unit (11) and a filtration unit (12) controlled by the control unit (11),
- a portable module (20) of the wireless autonomous module type, comprising means for storing electrical energy and integrating at least one portable air sensor arranged to be able to be:
- coupled to the air purifier (10), or
- uncoupled from the air purifier (10),
the portable module (20) comprising a man-machine interface (31, 32, 33)
and/or
the system for purifying air further comprises a multimedia portable electronic device, arranged to form a portable man-machine interface (31, 32, 33) and arranged to display measurements of the portable air sensor,
the control unit (11) being arranged to receive from said at least one man-machine interface (31, 32, 33), an instruction to control the filtration unit (12) according to at least:
- one coupled operating mode considering a return of measurements from the coupled portable air sensor, and
- one uncoupled operating mode not considering a return of measurements from the uncoupled portable air sensor,
where in the uncoupled operating mode of the air purifier (10), the man-machine interface (31, 32, 33) of the portable module and/or of the multimedia portable electronic device, is arranged to display measurements from the uncoupled portable air sensor.

2. System for purifying air according to the preceding claim, comprising at least one other air sensor, and wherein the uncoupled operating mode comprises:
- a closed loop operating mode considering a return of measurements from said at least one other air sensor, or
- an open loop operating mode not considering any return of measurement from the air sensor.

3. System for purifying air according to the preceding claim, wherein, in the coupled operating mode, the control unit considers:
- only the measurements from the portable air sensor, or
- measurements from the portable air sensor and measurements from said another air sensor.

4. System for purifying air according to one of claims 2 or 3, wherein in the coupled operating mode of the purifier, the control unit considers the worst of the measurements between the measurements returned by the portable air sensor and by said other air sensor.

5. System for purifying air according to one of the preceding claims, wherein the portable module (20) comprises an autonomous ventilation unit, arranged to create an airflow to a portion for measuring the portable air sensor.

6. System for purifying air according to one of the preceding claims, wherein said man-machine interface is a first man-machine interface arranged to display the measurements from the uncoupled portable air sensor during the uncoupled operating mode and the system for purifying air comprises a second man-machine interface arranged to control the air purifier during an uncoupled operating mode.

7. System for purifying air according to the preceding claim, wherein the first man-machine interface (31) is integral with the portable air sensor.

8. System for purifying air according to claim 6 or 7, wherein the second man-machine interface (32) is integral with the air purifier (10).

9. System for purifying air according to one of the preceding claims, comprising complementary contact terminals, arranged to establish an electrical contact between the air purifier (10) and the portable air sensor when the latter is coupled with the air purifier (10).

10. System for purifying air according to one of the preceding claims, comprising a contactless connection interface, arranged to establish a contactless connection between the air purifier (10) and the portable air sensor.

11. Method for using a system for purifying air according to one of the preceding claims, comprising the steps consisting of:
- controlling the air purifier (10) from the at least one man-machine interface to make the filtration unit (12) operate in a room of a dwelling,
- positioning the uncoupled portable air sensor in a location located at a distance from the air purifier (10), for example in another room of the dwelling, and thus controlling the filtration unit (12) according to the uncoupled operating mode,
- displaying measurements from the portable air sensor on said man-machine interface.

12. Method for use according to the preceding claim, comprising the steps consisting of:
- moving the air purifier (10) into the location previously located at a distance,
- controlling the air purifier (10) from the at least one man-machine interface,
- coupling the portable air sensor with the air purifier (10),
- making the filtration unit (12) operate according to the coupled operating mode in said location.

13. Method for use according to one of claims 11 or 12, wherein, if the portable air sensor is coupled and attached to the air purifier (10), and if the purification unit operates in coupled operating mode, then the method comprises a step consisting of making the purification unit operate automatically in uncoupled operating mode at the time of a detachment of the portable air sensor from the air purifier (10).

14. Method for use according to one of claims 12 or 13, wherein the purification unit is automatically controlled according to the coupled operating mode when the portable air sensor is again attached to the air purifier (10).
